# EUROPÄISCHE PATENTSCHRIFT

(11) **EP 0 451 567 B1**
(45) Veröffentlichungstag und Bekanntmachung des Hinweises auf die Patenterteilung: **01.06.1994**
(21) Anmeldenummer: 91104401.4
(22) Anmeldetag: 21.03.1991
(51) Int. Cl.: G01N 17/00

(54) **Verfahren und Vorrichtung zur Bestimmung des Korrosionsgrades von Metallteilen**
Method and apparatus for determining the level of corrosion of metal parts
Procédé et dispositif pour la détermination du degré de corrosion des éléments métalliques

(30) Priorität: 12.04.1990 DE 4011785
(43) Veröffentlichungstag der Anmeldung: 16.10.1991
(73) Patentinhaber: Drägerwerk Aktiengesellschaft, 23542 Lübeck (DE)
(72) Erfinder: Haupt, Stephan, Dr. rer.nat., W-2400 Lübeck (DE); Breede, Claus Dieter, W-2405 Ahrensbök (DE); Falb, Wolfgang, W-2401 Krummesse (DE); Wallroth, Carl F., Dr., W-2400 Lübeck (DE)

(56) Entgegenhaltungen:
- DE-A- 2 361 709
- DE-A-26 110 50

## Beschreibung

Die Erfindung betrifft ein Verfahren zur Bestimmung des Korrosionsgrades von Metallteilen, insbesondere von Hohlräumen in diesen Teilen, und eine Vorrichtung zur Durchführung dieses Verfahrens.

Bei Geräten mit metallischen Oberflächen, die beispielsweise zur Aufbewahrung oder Dosierung von aggressiven Flüssigkeiten oder Gasen dienen, kann die Funktion durch Korrosion an den mit den aggressiven Medien in Kontakt kommenden metallischen Oberflächen beeinträchtigt werden.

In einigen Fällen ist die Überprüfung der Funktionsräume auf Korrosionsfreiheit optisch, unter Umständen mittels einer fiberoptischen Sonde, ohne Demontage möglich. Meistens sind die Funktionsräume aber nur nach einer aufwendigen Demontage einer optischen Überprüfung zugänglich. Der hohe Aufwand für die Demontage und die anschließende erneute Montage und Justierung des Gerätes sind ein entscheidender Nachteil der optischen Überprüfung von solchen Geräten. Der Service wird dadurch sehr teuer, und das Gerät ist relativ lange nicht einsatzfähig.

Aufgabe der Erfindung ist es, ein Verfahren und eine Vorrichtung zur Durchführung dieses Verfahrens anzugeben, das eine schnelle und zuverlässige Beurteilung des Korrosionsgrades von Metallteilen ermöglicht, ohne daß diese Teile optisch zugänglich sein oder ausgebaut werden müssen, wobei die Funktionsteile in betriebsbereitem Zustand gelassen werden können.

Die Aufgabe wird dadurch gelöst, daß die Metallteile einer von der Umgebung abgeschlossenen Atmosphäre aus einem inerten Trägergas mit einem Zusatz eines nur mit den auf den Oberflächen der Metallteile gebildeten Korrosionsprodukten eine chemische und/oder physikalische Reaktion eingehenden reaktiven Gases ausgesetzt werden, und daß die Differenz zwischen der den Metallteilen zugeleiteten und der von den Metallteilen wieder abgezogenen Menge reaktiven Gases bestimmt wird.

Der Vorteil des Verfahrens liegt darin, daß die Überprüfung des Gerätes völlig ohne Demontage erfolgen kann. Das reaktive Gas dringt in alle zu untersuchenden Hohlräume ein. Nach Ausspülen des reaktiven Gases ist das Gerät ohne Montage- oder Justieraufwand sofort wieder einsatzbereit. Die Kosten und der Zeitaufwand für den Service sind somit erheblich gegenüber einer optischen Kontrolle reduziert. Durch die Durchspülung auch versteckter Hohlräume werden auch solche Oberflächenbereiche erfaßt, die für eine optischen Prüfung unzugänglich sind.

Als reaktive Gase können je nach zu untersuchender Metallart z. B. Schwefelwasserstoff (H₂S) für Eisen und Ammoniak (NH₃) für Messing verwandt werden, als Trägergas wird z. B. Luft verwandt. Das reaktive Gas ist zu chemischen Reaktionen mit den Korrosionsprodukten, für deren Nachweis es bestimmt ist, fähig, wird also beim Kontakt mit diesen Korrosionsprodukten im Trägergasstrom abgereichert. Zur Abreicherung können auch physikalische Reaktionen wie Lösung in Flüssigkeiten oder Adsorption an Oberflächen beitragen.

Das reaktive Gas wird vorzugsweise in einer Flüssigkeit gelöst bevorratet und in einem Prüfgerät eingesetzt. So ist z.B. Ammoniak in Wasser gelöst leicht zu beschaffen und bis zum Einsatz zu lagern, was bei gasförmigem Ammoniak mehr Probleme bereiten würde. Die Dosierung des reaktiven Gases über eine permeable Membran ermöglicht gleichzeitig eine Trennung des reaktiven Gases von der Flüssigkeit und eine unproblematische Zuführung kleinster Mengen des reaktiven Gases zu dem Trägergas.
Als Sensor für das reaktive Gas ist ein entsprechendes Prüfröhrchen besondere geeignet, da es zum Nachweis kleinster Gasspuren fähig ist und gleichzeitig billig und robust ist.

Die Erfindung wird anhand der Beschreibung eines Ausführungsbeispiels einer Vorrichtung zur Durchführung des erfindungsgemäßen Verfahrens beschrieben.

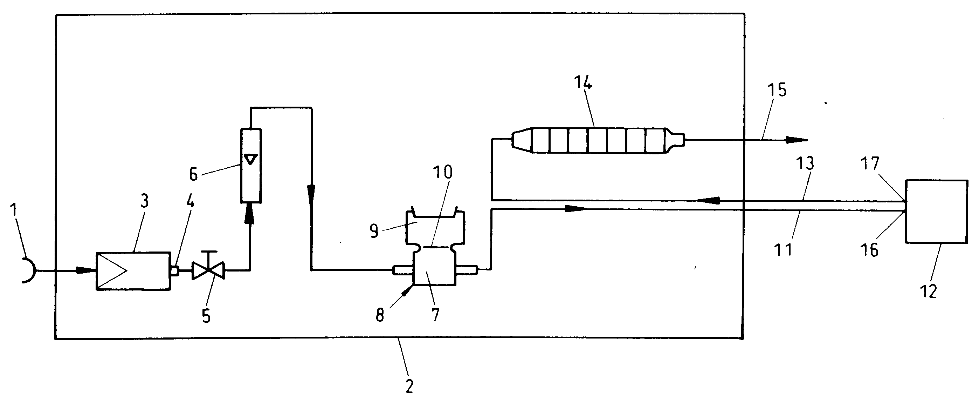

In der einzigen Figur der Zeichnung ist eine solche Vorrichtung schematisch dargestellt.

Über den Trägergaseingang (1) gelangt Druckluft als Trägergas von einer nicht dargestellten Druckluftquelle in die Prüfvorrichtung (2). Die Druckluft gelangt in einen Druckminderer (3), an dessen Ausgang (4) ein definierter Trägergasdruck ansteht. über eine einstellbare Dosierdrossel (5) wird ein definierter Trägergasvolumenstrom erzeugt, der mittels einer Meßröhre (6) bestimmt werden kann. Das Trägergas strömt dann durch eine erste Kammer (7) eines Dosiergerätes (8). In einer zweiten Kammer (9) des Dosiergerätes (8) befindet sich das in einer Flüssigkeit gelöste reaktive Gas, in diesem Beispiel Ammoniak in Wasser. Die beiden Kammern (7, 9) sind durch eine für das Gas permeable, für die Flüssigkeit aber unpermeable Membran (10) getrennt. Durch die Membran (10) hindurch wird so das Trägergas mit einer kleinen Menge des reaktiven Gases versetzt. In diesem Beispiel wird ein als Trägergas dienender Luftstrom von 50 bis 500 ml/min mit 10 bis 200 ppm Ammoniak versetzt. Das Gasgemisch gelangt über eine erste Leitung (11) in die Hohlräume eines zu untersuchenden Gerätes (12). Über eine Rückführleitung (13) wird das Gas zu der Prüfvorrichtung (2) zurückgeführt. Das Gas durchströmt ein für das reaktive Gas empfindliches Prüfröhrchen (14) und entweicht dann über eine Leitung (15) ins Freie oder in eine geeignete Einrichtung zur Gasfortleitung.

Zur Ermittlung des in dem Trägergasstrom enthaltenen Anteils an reaktivem Gas wird zunächst die Leitung (11) mit der Rückführleitung (13) verbunden, und der Gasfluß wird für etwa eine Minute in Gang gesetzt. Das durchströmende Gas ändert sich in seiner Zusammensetzung nicht und an dem Prüfröhrchen (14) kann auf den ersten Teilstrichen die dem Trägergas mittels des Dosiergerätes (8) zugesetzte Menge reaktiven Gases abgelesen werden.

Zur Überprüfung des Gerätes (12) auf Korrosion wird dieses nun mit seinem Eingang (16) an die Leitung (11) und mit seinem Ausgang (17) an die Rückführleitung (13) angeschlossen. Das Gas durchströmt die Funktionsräume des Gerätes (12). In diesen Funktionsräumen sind Messingteile vorhanden, die durch die Einwirkung von halogenierten Kohlenwasserstoffen Korrosionsspuren aufweisen können. Ist dies der Fall, reagiert das in dem Trägergas enthaltene Ammoniak mit den Korrosionsprodukten und ist somit in dem vom Gerät (12) zur Prüfvorrichtung (2) rückgeführten Gasstrom abgereichert. Ist das Gerät korrodiert, so daß seine Funktion in absehbarer Zeit beeinträchtigt werden könnte, eine Grundüberholung also nötig ist, so wird das Ammoniak so stark abgereichert, daß es erst nach mehreren Minuten Durchströmungszeit auf dem Prüfröhrchen (14) nachweisbar wird. Bei unkorrodiertem Gerät ist das Ammoniak sehr kurz nach Durchströmungsbeginn nachweisbar. Daher ist also eine sehr sichere und eindeutige Aussage über den Korrosionszustand des Gerätes möglich. Nach einem Durchspülen mit reiner Luft ist dieses sofort wieder einsatzfähig.

## Patentansprüche

1. Verfahren zur Bestimmung des Korrosionsgrades von Metallteilen, insbesondere von Hohlräumen in diesen Teilen, dadurch gekennzeichnet, daß die Metallteile einer von der Umgebung abgeschlossenen Atmosphäre aus einem inerten Trägergas mit einem Zusatz eines nur mit den auf den Oberflächen der Metallteile gebildeten Korrosionsprodukten eine chemische und/oder physikalische Reaktion eingehenden reaktiven Gases ausgesetzt werden, und daß die Differenz zwischen der den Metallteilen zugeleiteten und der von den Metallteilen wieder abgezogenen Menge reaktiven Gases bestimmt wird.

2. Verfahren nach Anspruch 1, dadurch gekennzeichnet, daß als Trägergas Luft und als reaktives Gas wahlweise Schwefelwasserstoff (H₂S) oder Ammoniak (NH₃) vorgesehen ist.

3. Vorrichtung zur Durchführung des Verfahrens nach Anspruch 1 oder 2, dadurch gekennzeichnet, daß sie aufgebaut ist aus
a) einer Verbindung (1) zu einer Quelle eines inerten Trägergases,
b) einer Dosiereinrichtung (5) für das Trägergas zur Herstellung eines definierten Trägergas-Volumenstromes,
c) einer Mischvorrichtung (8) zum Mischen des Trägergases mit einem definierten Volumenstrom eines reaktiven Gases, das mit auf den Oberflächen von Metallteilen gebildeten Korrosionsprodukten eine chemische und/oder physikalische Reaktion eingeht,
d) einer Zuführung (11) des Gasgemisches zu den zu untersuchenden Metallteilen (12),
e) einer Rückführung (13) des Gasgemisches von den zu untersuchenden Metallteilen (12) und
f) einem Sensor (14) zur Bestimmung des in dem rückgeführten Gasgemisch enthaltenen Anteils an reaktivem Gas.

4. Vorrichtung nach Anspruch 3, dadurch gekennzeichnet, daß die Mischvorrichtung (8) aus einer ersten Kammer (9) für das in einer Flüssigkeit gelöste reaktive Gas besteht, die durch eine für das reaktive Gas, nicht aber für die Flüssigkeit durchlässige Membran (10) von einer, von dem Trägergas durchströmten zweiten Kammer (7) getrennt ist.

5. Vorrichtung nach Anspruch 3 oder 4, dadurch gekennzeichnet, daß als Sensor ein zur Messung der Konzentration des eingesetzten reaktiven Gases geeignetes Prüfröhrchen (14) vorgesehen ist.

## Claims

1. Method for determining the degree of corrosion of metal parts, in particular of cavities in these parts, characterised in that the metal parts are exposed to an atmosphere closed from the environment, consisting of an inert carrier gas with an addition of a reactive gas entering into a chemical and/or physical reaction only with the corrosion products formed on the surfaces of the metal parts, and in that the difference between the quantity of reactive gas supplied to the metal parts and that drawn off again from the metal parts is determined.

2. Method according to claim 1, characterised in that air is provided as carrier gas and hydrogen sulfide (H₂S) or ammonia (NH₃) is provided as reactive gas, as desired.

3. Device for carrying out the method according to claim 1 or 2, characterised in that it is constructed from
a) a connection (1) to a source of an inert carrier gas,
b) a dosing device (5) for the carrier gas for producing a defined volume flow of carrier gas,
c) a mixing device (8) for mixing the carrier gas with a defined volume flow of a reactive gas, which enters a chemical and/or physical reaction with the corrosion products formed on the surfaces of the metal parts,
d) a supply (11) of the gas mixture to the metal parts (12) to be examined,
e) a return line (13) of the gas mixture from the metal parts (12) to be examined and
f) a sensor (14) for determining the proportion of reactive gas contained in the returned gas mixture.

4. Device according to claim 3, characterised in that the mixing device (8) consists of a first chamber (9) for the reactive gas dissolved in a liquid, which is separated by a membrane (10) permeable to the reactive gas, but not to the liquid, from the second chamber (7) which has carrier gas flowing through it.

5. Device according to claim 3 or 4, characterised in that a test tube (14) is provided as a sensor which is suitable for measuring the concentration of the reactive gas used.

## Revendications

1. Procédé servant à déterminer le degré de corrosion de parties métalliques, en particulier de cavités ménagées dans ces parties, caractérisé en ce que les parties métalliques sont exposées à une atmosphère, isolée du milieu environnant, comportant un gaz vecteur inerte, auquel on a ajouté un gaz réactif n'entrant en réaction chimique et/ou physique qu'avec les produits de corrosion formés sur les surfaces des parties métalliques, et en ce que la différence entre la quantité de gaz réactif acheminée vers les parties métalliques et la quantité de gaz réactif qui en est ensuite retirée, est déterminée.

2. Procédé selon la revendication 1, caractérisé en ce que de l'air est prévu comme gaz vecteur et que de l'acide sulfhydrique (H₂S) ou de l'ammoniac (NH₃) sont prévus, au choix, comme gaz réactif.

3. Dispositif de mise en oeuvre du procédé selon la revendication 1 ou 2, caractérisé en ce qu'il comporte
a) une liaison (1) avec une source de gaz vecteur inerte,
b) un dispositif de dosage (5) destiné au gaz vecteur, permettant de produire un flux défini d'un volume de gaz porteur,
c) un dispositif de mélange (8) destiné à mélanger le gaz vecteur avec un flux défini d'un volume de gaz réactif entrant en réaction chimique et/ou physique avec les produits de corrosion formés sur les surfaces de parties métalliques,
d) une conduite (11) acheminant le mélange gazeux vers les parties métalliques (12) à contrôler,
e) une conduite de retour (13) du mélange gazeux l'évacuant hors des parties métalliques (12) à contrôler et
f) un capteur (14) destiné à déterminer la quantité de gaz réactif présente dans le mélange gazeux évacué.

4. Dispositif selon la revendication 3, caractérisé en ce que le dispositif de mélange (8) est constitué d'une première chambre (9) destinée au gaz réactif dissous dans un liquide, qui est séparée d'une deuxième chambre (7), traversée par le gaz vecteur, par une membrane (10) perméable au gaz réactif, mais imperméable au liquide.

5. Dispositif selon la revendication 3 ou 4, caractérisé en ce qu'un tube de contrôle (14), susceptible de mesurer la concentration en gaz réactif employé, est prévu comme capteur.
